# EUROPEAN PATENT APPLICATION

(11) **EP 4 307 797 A1**
(43) Date of publication of application: **17.01.2024**
(21) Application number: 21930094.4
(22) Date of filing: 10.03.2021
(51) Int. Cl.: H04W 72/04

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); SUN, Weiqi, Beijing 100190 (CN); WANG, Jing, Beijing 100190 (CN); CHEN, Lan, Beijing 100190 (CN)
(74) Representative: Hoffmann Eitle
(86) International application number: PCT/JP2021/009463
(87) International publication number: WO 2022/190237

(57) **Abstract**

A terminal according to one aspect of the present disclosure includes a receiving section that receives one piece of downlink control information (DCI) for one or more repetition transmissions of an uplink shared channel (Physical Uplink Shared Channel (PUSCH)) and information related to a number of repetitions of the PUSCH, and a control section that determines, based on a number of repetitions indicated by using the information related to the number of repetitions, an association between a sounding reference signal resource and one or more SRS resource indicator (SRI) field values included in the DCI, the association being for application to transmission of the PUSCH. According to one aspect of the present disclosure, it is possible to appropriately control PUSCH repetition transmission even when multiple TRPs are applied.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For 3GPP Rel. 15, repetition transmission of a UL data channel (for example, an uplink shared channel (Physical Uplink Shared Channel (PUSCH))) is supported. A UE performs control so as to transmit the PUSCH across a plurality of slots (for example, K consecutive slots) based on a repetition factor K configured from a network (for example, a base station). In other words, when the repetition transmission is performed, respective PUSCHs are transmitted in different slots (for example, in units of slots).

On the other hand, for Rel. 16 (or later versions), a plurality of PUSCH transmissions performed in 1 slot when PUSCH repetition transmission is performed are under study. In other words, respective PUSCH transmissions are performed in units of anything shorter than the slots (for example, in units of sub-slots or in units of mini-slots).

For Rel. 16 (or later versions), dynamic switching between single PUSCH transmission and PUSCH repetition transmission is under study.

For NR, communication using one or a plurality of transmission/reception points (TRPs) (multi-TRP) is under study.

However, for NR specifications thus far, how to control PUSCH repetition transmission in multiple panels/TRPs has not been fully studied. Unless PUSCH repetition transmission in multi-TRP is appropriately performed, throughput reduction or communication quality degradation may occur.

Thus, an object of the present disclosure is to provide a terminal, a radio communication method, and a base station that can appropriately control PUSCH repetition transmission.

### Solution to Problem

A terminal according to one aspect of the present disclosure includes a receiving section that receives one piece of downlink control information (DCI) for one or more repetition transmissions of an uplink shared channel (Physical Uplink Shared Channel (PUSCH)) and information related to a number of repetitions of the PUSCH, and a control section that determines, based on a number of repetitions indicated by using the information related to the number of repetitions, an association between a sounding reference signal resource and one or more SRS resource indicator (SRI) field values included in the DCI, the association being for application to transmission of the PUSCH.

### Advantageous Effects of Invention

According to one aspect of the present disclosure, it is possible to appropriately control PUSCH repetition transmission even when multiple TRPs are applied.

### Brief Description of Drawings

[FIG. 1] FIGS. 1A and 1B are each a diagram to show an example of PUSCH repetition transmission.
[FIG. 2] FIGS. 2A and 2B are each a diagram to show an example of an invalid symbol pattern.
[FIG. 3] FIGS. 3A and 3B are diagrams to show an example of nominal repetitions and actual repetitions.
[FIG. 4] FIG. 4 is a diagram to show an example of PUSCH repetition transmission in multi-TRP.
[FIG. 5] FIGS. 5A and 5B are each a diagram to show an example of an association between an SRI field and an SRS resource in Rel. 16.
[FIG. 6] FIGS. 6A and 6B are each a diagram to show another example of the association between the SRI field and the SRS resource in Rel. 16.
[FIG. 7] FIG. 7 is a diagram to show an example of an association between a TPMI field and an SRS resource in Rel. 16.
[FIG. 8] FIGS. 8A and 8B are each a diagram to show an example of an association between an SRI field and an SRS resource.
[FIG. 9] FIG. 9 is a diagram to show an example of an SRI field indication method according to a first embodiment.
[FIG. 10] FIG. 10 is a diagram to show another example of the SRI field indication method according to the first embodiment.
[FIG. 11] FIG. 11 is a diagram to show an example of a TPMI field-related association according to the second embodiment.
[FIG. 12] FIG. 12 is a diagram to show an example of a TPMI field indication method according to the second embodiment.
[FIG. 13] FIG. 13 is a diagram to show another example of the TPMI field indication method according to the second embodiment.
[FIG. 14] FIG. 14 is a diagram to show an example of a schematic structure of a radio communication system according to one embodiment.
[FIG. 15] FIG. 15 is a diagram to show an example of a structure of a base station according to one embodiment.
[FIG. 16] FIG. 16 is a diagram to show an example of a structure of a user terminal according to one embodiment.
[FIG. 17] FIG. 17 is a diagram to show an example of a hardware structure of the base station and the user terminal according to one embodiment.

### Description of Embodiments

### (Repetition Transmission)

For Rel. 15, repetition transmission is supported in data transmission. For example, a base station (network (NW), gNB) performs a certain number of repetition transmissions of DL data (for example, a downlink shared channel (PDSCH)). Alternatively, a UE performs a certain number of repetition transmissions of UL data (for example, an uplink shared channel (PUSCH)).

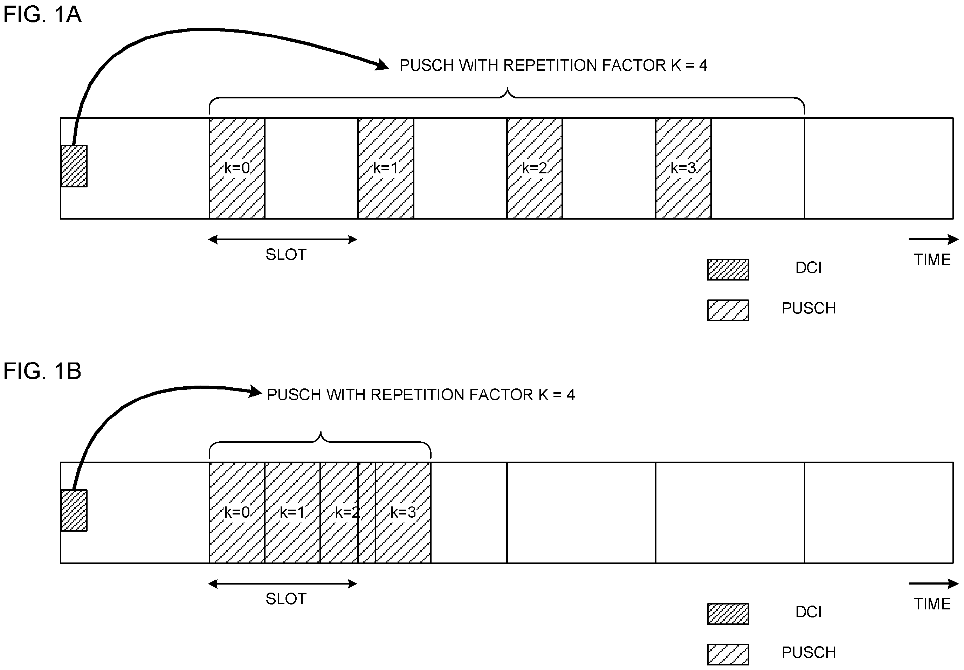

FIG. 1A is a diagram to show an example of PUSCH repetition transmission. FIG. 1A shows an example in which the PUSCH with a certain number of repetitions is scheduled by single DCI. The number of the repetitions is also referred to as a repetition factor K or an aggregation factor K.

The repetition factor K = 4 in FIG. 1A, but a K value is not limited to this. The n-th repetition is also referred to as the n-th transmission occasion or the like, and may be identified by a repetition index k (0 ≤ k ≤ K-1). FIG. 1A shows repetition transmission of a PUSCH (for example, a dynamic grant-based PUSCH) dynamically scheduled by the DCI, but the repetition transmission may be applied to repetition transmission of a configured grant-based PUSCH.

For example, in FIG. 1A, the UE semi-statically receives information (for example, aggregationFactorUL or aggregationFactorDL) indicating the repetition factor K by using higher layer signaling. Here, the higher layer signaling may be, for example, any one or combinations of RRC (Radio Resource Control) signaling, MAC (Medium Access Control) signaling, broadcast information, and the like.

For example, the MAC signaling may use MAC control elements (MAC CEs), MAC PDUs (Protocol Data Units), and the like. For example, the broadcast information may be master information blocks (MIBs), system information blocks (SIBs), minimum system information (RMSI (Remaining Minimum System Information)), and the like.

The UE controls PDSCH reception processing (for example, at least one of reception, demapping, demodulation, and decoding) or PUSCH transmission processing (for example, at least one of transmission, mapping, modulation, and coding) in K consecutive slots on the basis of a field value of at least one of the following (or information indicated by the field value) in the DCI:
- Allocation of time domain resources (for example, start symbols, the number of symbols in each slot, or the like)
- Allocation of frequency domain resources (for example, a certain number of resource blocks (RBs) or a certain number of resource block groups (RBGs))
- Modulation and coding scheme (MCS) index
- Configuration of PUSCH demodulation reference signal (DMRS)
- PUSCH spatial relation information (spatial relation info) or transmission configuration indication (TCI (Transmission Configuration Indication or Transmission Configuration Indicator)) state (TCI state (TCI-state))

Identical symbol allocation may be applied between the K consecutive slots. FIG. 1A shows a case where a PUSCH in each slot is allocated to a certain number of symbols from the head of the slot. The identical symbol allocation between the slots may be determined in a manner as described in the time domain resource allocation above.

For example, the UE may determine symbol allocation in each slot on the basis of a start symbol S and the number of symbols L (for example, a Start and Length Indicator (SLIV)) determined on the basis of a value m of a certain field (for example, a time domain resource allocation (TDRA) field) in DCI. Note that the UE may determine the first slot on the basis of K2 information determined on the basis of the value m of the certain field (for example, the TDRA field) of the DCI.

On the other hand, in the K consecutive slots, redundancy versions (RVs) each applied to a TB based on identical data may be identical to each other, or may be at least partially different from each other. For example, an RV applied to the TB in the n-th slot (transmission occasion, repetition) may be determined on the basis of a value of a certain field (for example, an RV field) in the DCI.

When resources allocated in the K consecutive slots have different communication directions in UL, DL, or flexible, in at least 1 symbol, of each slot specified by at least one of uplink/downlink communication direction indication information for TDD control (for example, an RRC IE "TDD-UL-DL-ConfigCommon" or "TDD-UL-DL-ConfigDedicated") and a slot format identifier (Slot format indicator) of DCI (for example, DCI format 2_0), it may be assumed that resources of a slot including the symbol are not transmitted (or received).

In Rel. 15, as shown in FIG. 1A, the PUSCH is repetitively transmitted across a plurality of slots (in units of slots), but in Rel. 16 (or later versions), it is assumed that PUSCH repetition transmission is performed in units of anything shorter than the slots (for example, units of sub-slots, units of mini-slots, or units of a certain number of symbols) (see FIG. 1B).

The repetition factor K = 4 in FIG. 1B, but a K value is not limited to this. The n-th repetition is also referred to as the n-th transmission occasion or the like, and may be identified by a repetition index k (0 ≤ k ≤ K-1). FIG. 1B shows repetition transmission of a PUSCH (for example, a dynamic grant-based PUSCH) dynamically scheduled by the DCI, but the repetition transmission may be applied to repetition transmission of a configured grant-based PUSCH.

The UE may determine symbol allocation for PUSCH transmission (for example, a PUSCH with k = 0) in a certain slot on the basis of a start symbol S and the number of symbols L (for example, StartSymbol and length) determined on the basis of a value m of a certain field (for example, a TDRA field) in DCI for the PUSCH. Note that the UE may determine the certain slot on the basis of Ks information determined on the basis of the value m of the certain field (for example, the TDRA field) of the DCI.

The UE may dynamically receive information (for example, numberofrepetitions) indicating the repetition factor K by using downlink control information. The repetition factor may be determined on the basis of the value m of the certain field (for example, the TDRA field) in the DCI. For example, a table in which correspondence between a bit value, repetition factor K, start symbol S, and the number of symbols L notified by the DCI is defined may be supported.

Slot-based repetition transmission shown in FIG. 1A may be referred to as repetition transmission type A (for example, PUSCH repetition Type A), and sub-slot-based repetition transmission shown in FIG. 1B may be referred to as repetition transmission type B (for example, PUSCH repetition Type B). Note that in the present disclosure, a repetition transmission type and a repetition type may be interchangeably interpreted.

Application of at least one of repetition transmission type A and repetition transmission type B may be configured for the UE. For example, a repetition transmission type to be applied by the UE may be notified from the base station to the UE by higher layer signaling (for example, PUSCHRepTypeIndicator).

Any one of repetition transmission type A and repetition transmission type B may be configured for the UE for each DCI format to schedule the PUSCH.

For example, with respect to a first DCI format (for example, DCI format 0_1), when higher layer signaling (for example, PUSCHRepTypeIndicator-AorDCIFormat0_1) is configured for repetition transmission type B (for example, PUSCH-RepTypeB), the UE applies repetition transmission type B to PUSCH repetition transmission scheduled by the first DCI format. In a case other than that (for example, a case where PUSCH-RepTypeB is not configured or a case where PUSCH-RepTypeA is configured), the UE the UE applies repetition transmission type A to PUSCH repetition transmission scheduled by the first DCI format.

For Rel. 16 (or later versions), dynamic switching between single PUSCH transmission and PUSCH repetition transmission is under study.

When a higher layer parameter (for example, pusch-TimeDomainAllocationListDCI-0-1-r16 or pusch-TimeDomainAllocationListDCI-0-2-r16) related to PUSCH time domain allocation is configured for the UE, the number of repetitions (for example, 1, 2, 3, 4, 7, 8, 12, or 16) may be configured by a parameter (for example, numberOfRepetitions-r16) related to the number of PUSCH repetitions included in the higher layer parameter. The UE may judge, on the basis of a time domain resource allocation (TDRA) field of DCI, the number of PUSCH repetitions scheduled by the DCI. When the number of the repetitions is configured/specified to 1, the UE may perform the single PUSCH transmission.

### (Invalid Symbol Pattern)

Information related to a symbol (or symbol pattern) unavailable for PUSCH transmission, the information being notified to the UE when repetition transmission type B is applied to the PUSCH transmission, is also under study. The symbol pattern unavailable for the PUSCH transmission may be referred to as an invalid symbol pattern or the like.

Notification of the invalid symbol pattern using at least one of higher layer signaling and DCI is under study. The DCI may be a certain DCI format (for example, at least one of DCI format 0 1 and DCI format 0_2).

For example, information related to the invalid symbol pattern unavailable for the PUSCH transmission is notified to the UE by using a first higher layer parameter. The whether the information related to the invalid symbol pattern is applied may be notified to the UE by using the DCI. In this case, a bit field (field for notification of the whether the invalid symbol pattern) for indicating whether the information related to the invalid symbol pattern is applied may be configured for the DCI.

Whether the notification field (or an additional bit) in the DCI is configured may be notified to the UE by using a second higher layer parameter. In other words, when the information related to the invalid symbol pattern is notified by the first higher layer parameter, the UE may determine whether the information related to the invalid symbol pattern is applied on the basis of the second higher layer parameter and the DCI.

When the first higher layer parameter is not notified or not configured, the UE may control PUSCH transmission without considering the invalid symbol pattern. When the first higher layer parameter is notified or configured, the UE may judge whether the invalid symbol pattern is applied on the basis of the second higher layer parameter and the DCI. For example, when the addition of an additional bit (or certain field) to indicate whether the invalid symbol pattern is applied for the DCI is indicated by the second higher layer parameter, the UE may judge whether the invalid symbol pattern is applied on the basis of the certain field.

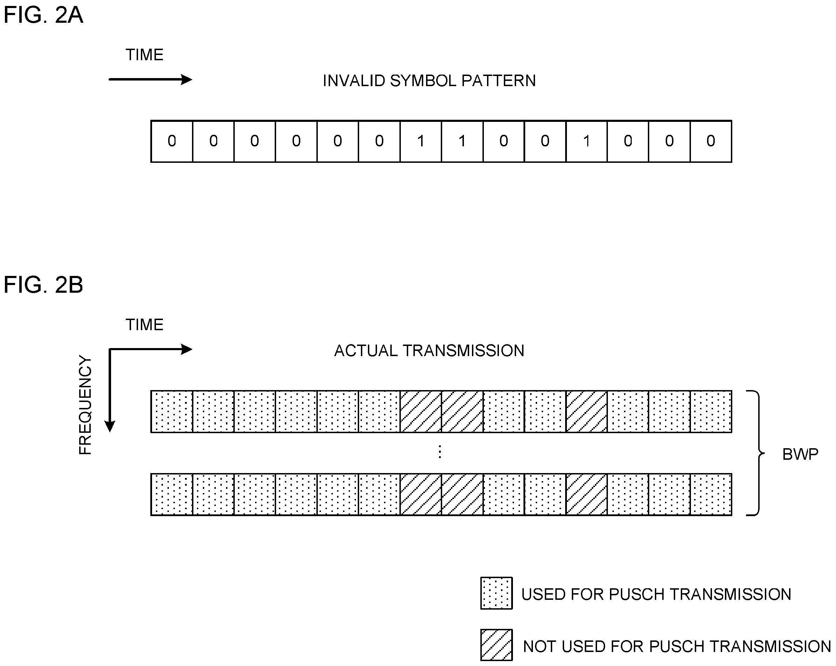

It is only necessary that the first higher layer parameter is information to notify a symbol pattern invalid for PUSCH transmission, and, for example, a bitmap form may be applied (see FIG. 2A). FIG. 2A is a diagram to show an example of a case where the invalid symbol pattern is defined by a bitmap (1-D bitmap) in relation to a time domain. The UE may judge, on the basis of information related to the invalid symbol pattern, resources available for the PUSCH transmission in one or more frequency bandwidths (for example, BWPs) (see FIG. 2B).

FIG. 2B shows a case where one or common invalid symbol pattern is applied to a plurality of BWPs, but a different invalid symbol pattern may be configured or applied for each BWP.

### (Nominal Repetitions/Actual Repetitions)

When the repetition transmission is performed in units of sub-slots by applying repetition transmission type B, a case where certain repetition transmission crosses a slot boundary (slot-boundary) occurs depending on a repetition factor (K), a data allocation unit, and the like.

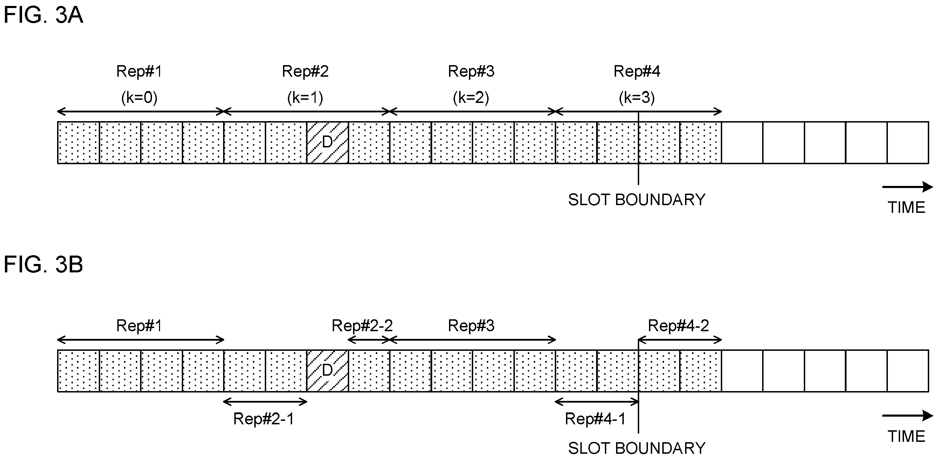

FIG. 3A shows an example of a case where repetition transmission type B with a repetition factor (K) being 4 and a PUSCH length (L) being 4 is applied. In FIG. 3A, a PUSCH with k = 3 is allocated across the slot boundary. In such a case, the transmission may be performed such that the PUSCH is divided (or segmented) by using the slot boundary as a reference (see FIG. 3B).

A case where a symbol (for example, a DL symbol, an invalid symbol, or the like) unavailable for PUSCH transmission is included in a slot is also assumed. FIG. 3A shows a case where the symbol (here, DL symbol) unavailable for the PUSCH transmission is included in some symbols in which a PUSCH with k = 1 is allocated. In such a case, the PUSCH transmission may be performed by using symbols except the DL symbol (see FIG. 3B).

In allocated symbols for a certain PUSCH, when a DL symbol (or invalid symbol) is included in symbols other than symbols on both ends, PUSCH transmission may be performed by using symbols other than a portion of the DL symbol. In this case, the PUSCH may be divided (or segmented).

FIG. 3B shows a case where, in sub-slot-based repetition transmission, a PUSCH with k = 1 (Rep #2) is divided into two portions (Rep #2-1 and Rep #2-2) by the DL symbol, and a PUSCH with k = 3 (Rep #4) is divided into two portions (Rep #4-1 and Rep #4-2) by the slot boundary.

Note that the repetition transmission before consideration of the DL symbol, invalid symbol, or slot boundary (FIG. 3A) may be referred to as nominal repetitions. The repetition transmission with consideration of the DL symbol, invalid symbol, or slot boundary (FIG. 3B) may be referred to as actual repetitions.

### (Spatial Relation for SRS and PUSCH)

In Rel-15 NR, the UE may receive information (SRS configuration information, for example, a parameter in an RRC control element "SRS-Config") used for transmission of a measurement reference signal (for example, a sounding reference signal (SRS)).

Specifically, the UE may receive at least one of information related to one or a plurality of SRS resource sets (SRS resource set information, for example, an RRC control element "SRS-ResourceSet") and information related to one or a plurality of SRS resources (SRS resource information, for example, an RRC control element "SRS-Resource").

One SRS resource set may be related to a certain number of SRS resources (a certain number of SRS resources may be grouped together). Each SRS resource may be identified by an SRS resource indicator (SRI) or an SRS resource ID (Identifier).

The SRS resource set information may include an SRS resource set ID (SRS-ResourceSetId), a list of SRS resource IDs (SRS-ResourceId) used in the resource set, an SRS resource type (for example, any one of a periodic SRS, a semi-persistent SRS, and aperiodic CSI (Aperiodic SRS)), and information about SRS usage.

Here, the SRS resource type may indicate any one of a periodic SRS (P-SRS), a semi-persistent SRS (SP-SRS), and an aperiodic SRS (A-SRS). Note that the UE may periodically (or, after activation, periodically) transmit the P-SRS and the SP-SRS, and may transmit the A-SRS on the basis of an SRS request of DCI.

The usage (an RRC parameter "usage" or an L1 (Layer-1) parameter "SRS-SetUse") may be, for example, beam management (beamManagement), codebook (CB), non-codebook (noncodebook (NCB)), antenna switching, or the like. An SRS for codebook or non-codebook usage may be used for determination of a precoder for codebook-based or non-codebook-based PUSCH transmission based on the SRI.

For example, in a case of the codebook-based transmission, the UE may determine the precoder for the PUSCH transmission on the basis of an SRI, a transmitted rank indicator (TRI), and a transmitted precoding matrix indicator (TPMI). In a case of the non-codebook-based transmission, the UE may determine the precoder for the PUSCH transmission on the basis of an SRI.

The SRS resource information may include an SRS resource ID (SRS-ResourceId), the number of SRS ports, an SRS port number, a transmission Comb, SRS resource mapping (for example, a time and/or frequency resource location, resource offset, a resource periodicity, the number of repetitions, the number of SRS symbols, an SRS bandwidth, or the like), hopping-related information, an SRS resource type, a sequence ID, SRS spatial relation information, and the like.

The SRS spatial relation information (for example, an RRC information element "spatialRelationInfo") may indicate information about a spatial relation between a certain reference signal and an SRS. The certain reference signal may be at least one of a synchronization signal/broadcast channel (Synchronization Signal/Physical Broadcast Channel (SS/PBCH)) block, a channel state information reference signal (CSI-RS), and an SRS (for example, another SRS). The SS/PBCH block may be referred to as a synchronization signal block (SSB).

The SRS spatial relation information may include, as an index of the above-described certain reference signal, at least one of an SSB index, a CSI-RS resource ID, and an SRS resource ID.

Note that in the present disclosure, an SSB index, an SSB resource ID, and an SSB Resource Indicator (SSBRI) may be interchangeably interpreted. A CSI-RS index, a CSI-RS resource ID, and a CSI-RS Resource Indicator (CRI) may be interchangeably interpreted. An SRS index, an SRS resource ID, and an SRI may be interchangeably interpreted.

The SRS spatial relation information may include a serving cell index, a BWP index (BWP ID), and the like corresponding to the above-described certain reference signal.

With respect to a certain SRS resource, when spatial relation information related to an SSB or CSI-RS and an SRS is configured, the UE may transmit the SRS resource by using the same spatial domain filter (spatial domain transmission filter) as a spatial domain filter (spatial domain reception filter) for reception of the SSB or CSI-RS. In this case, the UE may assume that a UE receive beam of the SSB or CSI-RS and a UE transmit beam of the SRS are the same.

With respect to a certain SRS (target SRS) resource, when spatial relation information related to another SRS (reference SRS) and the SRS (target SRS) is configured, the UE may transmit the target SRS resource by using the same spatial domain filter (spatial domain transmission filter) as a spatial domain filter (spatial domain transmission filter) for transmission of the reference SRS. In other words, in this case, the UE may assume that a UE transmit beam of the reference SRS and a UE transmit beam of the target SRS are the same.

The UE may determine, on the basis of a value of a certain field (for example, an SRS resource indicator (SRI) field) in DCI (for example, DCI format 0_1), a spatial relation for a PUSCH scheduled by the DCI. Specifically, the UE may use, for PUSCH transmission, spatial relation information (for example, an RRC information element "spatialRelationInfo") about an SRS resource determined on the basis of the value of the certain field (for example, the SRI).

When the codebook-based transmission is used for the PUSCH, two SRS resources per SRS resource set may be configured for the UE by RRC, and one of the two SRS resources may be indicated by DCI (1-bit SRI field). When the non-codebook-based transmission is used for the PUSCH, four SRS resources per SRS resource set may be configured for the UE by RRC, and one of the four SRS resources may be indicated by DCI (2-bit SRI field).

### (TPMI and Transmitted Rank)

For Rel. 16, a transmitted precoding matrix indicator (TPMI) and a transmitted rank (which may be referred to as a transmission layer) for codebook-based PUSCH transmission that are specified by a specific field (for example, a precoding information and number of layers field) included in downlink control information (for example, DCI format 0_1) are under study. Note that in the present disclosure, a rank and a layer may be interchangeably interpreted.

A precoder used by the UE for the codebook-based PUSCH transmission may be selected from an uplink codebook having the same number of antenna ports as a value configured by a higher layer parameter (for example, nrofSRS-Ports) configured for SRS resources.

A size (number of bits) of the specific field is variable depending on the number of antenna ports for the PUSCH (for example, the number of ports indicated by the above-described nrofSRS-Ports) and several higher layer parameters.

When a higher layer parameter (for example, txConfig) configured for the UE is configured as non-codebook (nonCodebook), the specific field may be 0 bit.

When the higher layer parameter (for example, txConfig) configured for the UE is configured as codebook for one antenna port, the specific field may be 0 bit.

When the higher layer parameter (for example, txConfig) configured for the UE is configured as codebook for four antenna ports, the specific field may have a bit-length of 2 to 6 bits on the basis of at least one of another higher layer parameter configured for the UE and the presence or absence (valid or invalid) of a transform precoder.

When the higher layer parameter (for example, txConfig) configured for the UE is configured as codebook for two antenna ports, the specific field may have a bit-length of 1 to 4 bits on the basis of at least one of another higher layer parameter configured for the UE and the presence or absence (valid or invalid) of the transform precoder.

Such another higher layer parameter may be at least one of a parameter for specifying a UL full power transmission mode (for example, ul-FullPowerTransmission or ul-FullPowerTransmission-rl6), a parameter indicating a maximum value of a UL transmitted rank (for example, maxRank), a parameter indicating a certain sub-set of precoding matrix indicators (PMIs) (for example, codebookSubset), and a parameter for specifying the transform precoder (for example, transformPrecoder).

For Rel. 16, a case that when PUSCH repetition transmission is present for PUSCH repetition type A, the number of transmission layers (transmitted ranks) for the PUSCH transmission is limited to 1 is under study.

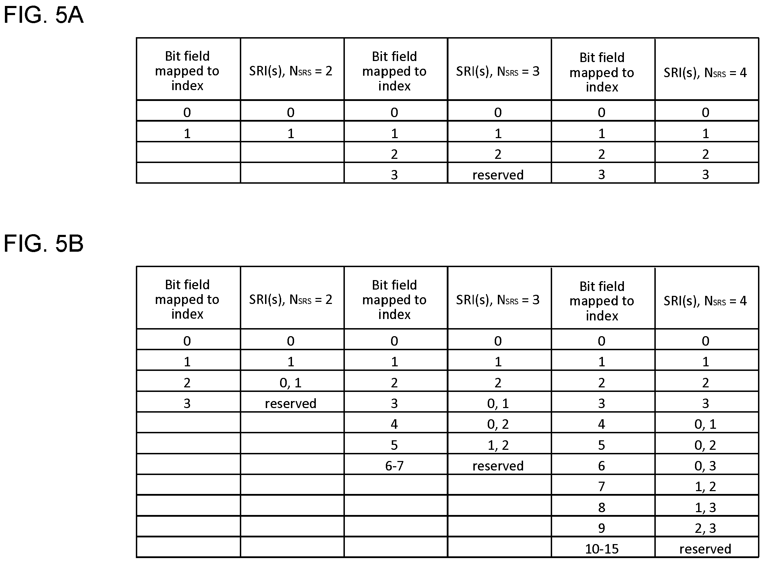

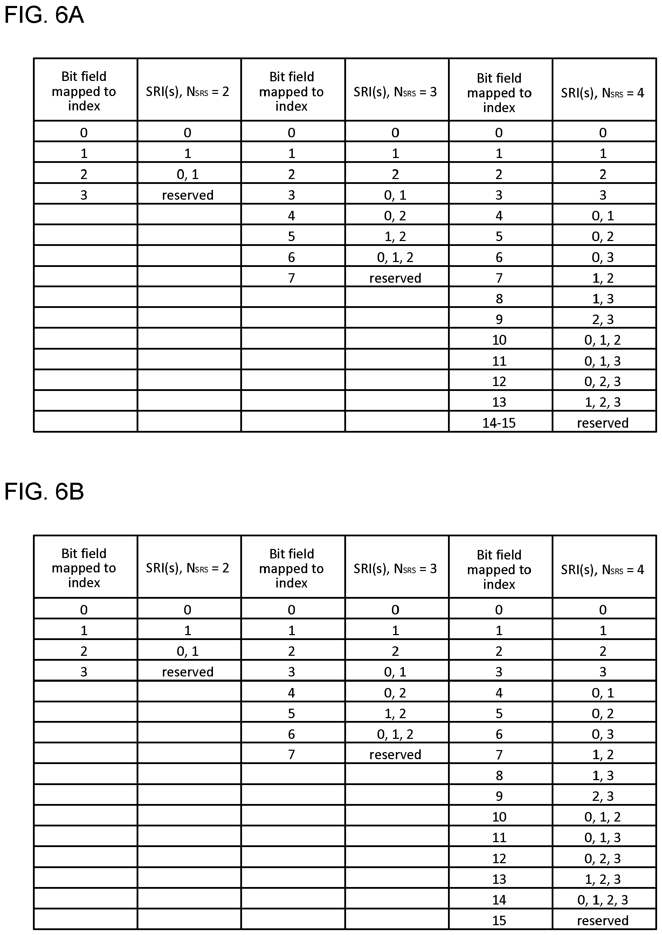

FIGS. 5A, 5B, 6A, and 6B are diagrams to show an example of associations between SRI fields and SRS resources in Rel. 16. FIGS. 5A, 5B, 6A, and 6B show the associations for maximum numbers of transmitted ranks (Lₘₐₓ) "1," "2," "3," and "4," respectively. In non-codebook-based MIMO, an SRI (field) ("Bit field mapped to index") is used for indicating a spatial relation and the number of transmission layers (ranks, ports) for a PUSCH. In a case where such repetition transmission of PUSCH repetition type A in which a transmitted rank is limited to 1 is performed, some entries included in the associations are not used. That is, in a case where a (maximum) transmitted rank (layer, port) is limited to 1, entries for indicating a plurality of transmitted ranks are not used.

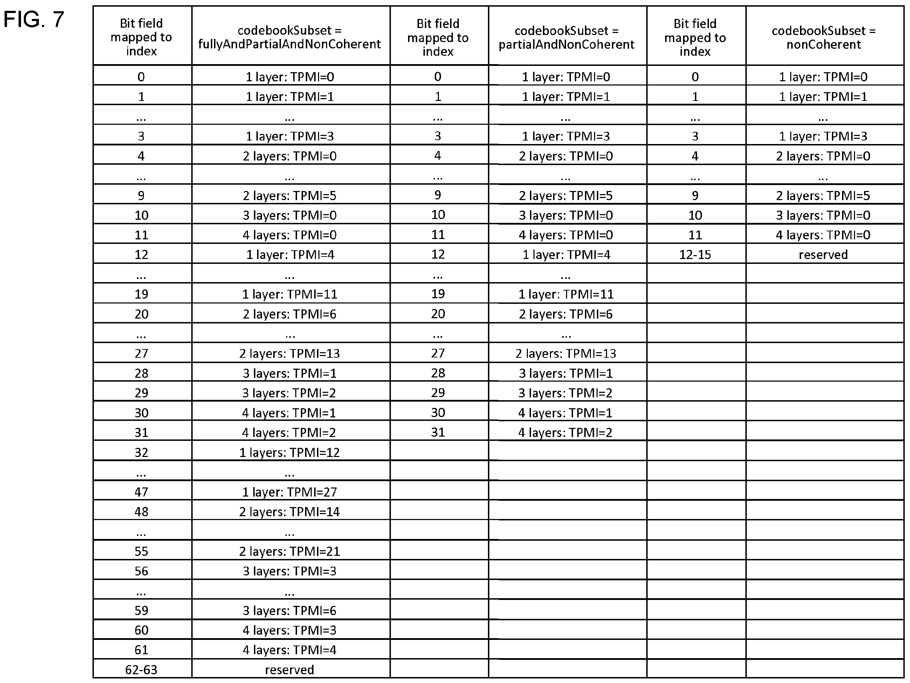

FIG. 7 is a diagram to show an example of an association between a TPMI field and an SRS resource in Rel. 16. The number of layers and a TPMI are associated with a precoding information and number of layers field ("Bit field mapped to index") included in DCI. In codebook-based MIMO, an SRI (field) is used for indicating a spatial relation, and a TPMI (field) is used for indicating the number of transmitted ranks for a PUSCH (for which a codebook is used). In a case where such repetition transmission of PUSCH repetition type A in which a transmitted rank is limited to 1 is performed, some entries included in the associations are not used. That is, in a case where a (maximum) transmitted rank (layer, port) is limited to 1, entries for indicating a plurality of transmitted ranks are not used.

### (Multi-TRP)

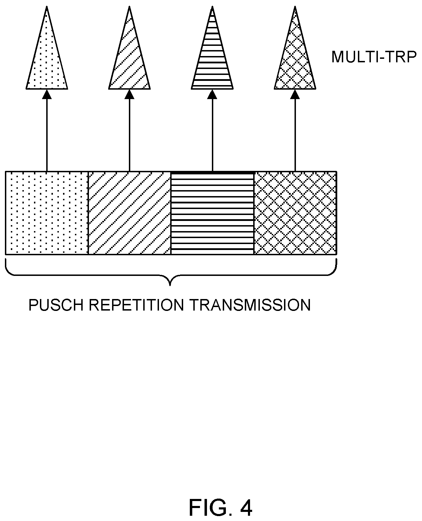

For NR, one or a plurality of transmission/reception points (TRPs) (multiple TRPs) that perform DL transmission to a UE by using one or a plurality of panels (multiple panels) are under study. The UE that performs UL transmission to one or a plurality of TRPs is under study (see FIG. 4).

The plurality of TRPs may correspond to the same cell identifier (ID), or may correspond to different cell IDs. The cell ID may be a physical cell ID, or may be a virtual cell ID.

For Rel. 17 (or later versions), multi-TRP PUSCH repetition transmission using a single piece of DCI (Single DCI based M-TRPPUSCH repetition) is under study.

For Rel. 17 (or later versions), support for dynamic switching between multi-TRP PUSCH repetition transmission and single-TRP PUSCH transmission is under study. The multi-TRP PUSCH repetition transmission may mean repetition transmission using a plurality of slots. The single-TRP PUSCH transmission may mean a single PUSCH transmission, PUSCH transmission using a single slot, or PUSCH repetition transmission using a plurality of slots for a single TRP.

For Rel. 17 (or later versions), a case that when a plurality of repetitions are scheduled for repetition transmission of a PUSCH of repetition type A, DCI overhead for the PUSCH is minimized as a result of limiting the number of transmitted ranks (layers) to 1 is under study.

As a method for indicating (configuring) the number of repetitions for the PUSCH, method 1 or method 2 below is conceivable:
- Method 1: The number of slots used for the transmission is configured by using a higher layer (dynamic switching of the number of repetitions fails).
- Method 2: The number of slots used for the transmission is configured in a TDRA association (table) by using a higher layer (dynamic switching of the number of repetitions can be performed by using DCI).

In PUSCH repetition type A, when a higher layer parameter to configure the number of repetitions for a resource allocation association (table) (for example, numberOfRepetitions-r16) is present, the number of repetitions K is dynamically indicated in the DCI (which means that dynamic switching between repetition transmissions and a single transmission is performed).

In PUSCH repetition type A, when K > 1, the PUSCH is limited to one transmission layer (transmitted rank). When K = 1, the number of transmission layers is not limited.

In order to minimize DCI overhead for a PUSCH for multiple TRPs, it is necessary to consider limitation on transmitted ranks (layers) in a case where K > 1 and to consider dynamic switching between a single transmission and repetition for PUSCH repetition type A. However, such transmitted ranks and dynamic switching between a single transmission and repetition have not been fully studied. Unless these studies are fully performed, PUSCH repetition transmission in the multiple TRPs is not appropriately performed, and throughput reduction or communication quality degradation may occur, and DCI signaling overhead may increase.

Thus, the inventors of the present invention came up with the idea of a PUSCH repetition transmission control method for resolving the above-described issue.

Embodiments according to the present disclosure will be described in detail with reference to the drawings as follows. The radio communication methods according to respective embodiments may each be employed individually, or may be employed in combination.

Note that in the present disclosure, a port, a panel, a beam, an Uplink (UL) transmission entity, a TRP, spatial relation information (SRI), a spatial relation, a control resource set (COntrol REsource SET (CORESET)), a PDSCH, a codeword, a base station, a certain antenna port (for example, a demodulation reference signal (DMRS) port), a certain antenna port group (for example, a DMRS port group), a certain group (for example, a code division multiplexing (CDM) group, a certain reference signal group, a CORESET group, a panel group, a beam group, a spatial relation group, or a PUCCH group), and a CORESET pool may be interchangeably interpreted. A panel Identifier (ID) and a panel may be interchangeably interpreted. A TRP ID and a TRP may be interchangeably interpreted.

In the present disclosure, an index, an ID, an indicator, and a resource ID may be interchangeably interpreted.

In the present disclosure, "A/B" may mean "at least one of A and B." In the present disclosure, "A/B/C" may mean "at least one of A, B, and C."

In the present disclosure, a list, a group, a cluster, a sub-set, and the like may be interchangeably interpreted. In the present disclosure, spatial relation information (SRI), an SRS resource indicator (SRI) (or SRI field), an SRS resource, a precoder, and the like may be interchangeably interpreted.

In the present disclosure, spatial relation information (SRI), a combination of pieces of SRI, SRI for codebook-based transmission, a combination of pieces of non-codebook-based SRI, spatialRelationInfo, a UL TCI, a TCI state, a Unified TCI, QCL, and the like may be interchangeably interpreted.

In the present disclosure, a first TRP and a second TRP and each of a first PUSCH and a second PUSCH, a first PUSCH transmission occasion and a second PUSCH transmission occasion, a first SRI and a second SRI, and the like may be interchangeably interpreted.

In the present disclosure, a transmitted rank, a transmission layer, the number of ranks, the number of layers, a maximum transmitted rank, a maximum transmission layer, a maximum value of a transmitted rank, the number of TPMI candidates, the number of TPMIs, a maximum number of TPMIs, a UL transmitted rank, a maximum value of a UL transmitted rank, and the like may be interchangeably interpreted. In the present disclosure, precoding information, a precoding information and number of layers field, a TPMI, a TPMI field, a TPMI value, and the like may be interchangeably interpreted.

PUSCH repetition transmission using a plurality of TRPs in embodiments below and each of PUSCH transmission using multiple TRPs, PUSCH repetition transmission for a plurality of TRPs, a PUSCH across a plurality of TRPs, PUSCH repetition across a plurality of TRPs, just PUSCH repetition, repetition transmission, a plurality of PUSCH transmissions, PUSCH transmission using a plurality of SRIs, multi-slot transmission, and the like may be interchangeably interpreted.

PUSCH transmission using a single TRP may be referred to as PUSCH transmission using a single TRP, PUSCH repetition transmission for a single TRP, a PUSCH across a single TRP, PUSCH repetition across a single TRP, a single PUSCH transmission for a single TRP, just a single PUSCH transmission, PUSCH transmission in a single TRP, PUSCH transmission using a single SRI, a single transmission, 1-slot transmission, or the like.

In the present disclosure, PUSCH repetition transmission for a single TRP may mean repetition transmission of a plurality of PUSCHs transmitted by using the same SRI/beam/precoder.

Note that each embodiment in the present disclosure will be described by using, as an example of UL transmission, PUSCH transmission for a single TRP/plurality of TRPs using one piece of DCI (single DCI) and codebook-based/non-codebook-based PUSCH transmission, but PUSCH transmission in which each embodiment can be employed is not limited to these. A common embodiment or different embodiments may be employed in the codebook-based PUSCH transmission and the non-codebook-based PUSCH transmission. The UL transmission is not limited to a PUSCH, and each embodiment of the present disclosure can also be appropriately employed in a PUCCH (the PUSCH may be interpreted as the PUCCH).

Each embodiment in the present disclosure will be described by using, as a main example, a case where the numbers of multiple TRPs, multiple SRIs, and the like are 2, but the numbers of these may be 3 or more. A "dynamic switch" in the present disclosure may mean a "switch using at least one of higher layer signaling and physical layer signaling." A "switch" of the present disclosure and each of switching, a change, changing, application, indication, configuration, and the like may be interchangeably interpreted.

Note that in the present disclosure, a single PUSCH transmission/PUSCH repetition transmission using a single TRP and PUSCH repetition transmission using multiple TRPs may be dynamically indicated/switched to each other by DCI. For the dynamic switching, a specific field included in DCI defined in Rel. 16 (or earlier versions) may be used, or a specific field defined in Rel. 17 (or later versions) may be used.

### (Radio Communication Method)

In each embodiment of the present disclosure, a case where PUSCH repetition type A is configured for a UE will be described. Each embodiment of the present disclosure is not limited to the case where PUSCH repetition type A is configured, and can also be appropriately employed in repetition transmission of an arbitrary type.

In each embodiment of the present disclosure, a case that a higher layer parameter to configure the number of repetitions for a resource allocation association (table) (for example, numberOfRepetitions-r16) is present may mean that the number of repetitions is dynamically indicated by using DCI.

In each embodiment of the present disclosure, multi-TRP PUSCH repetition transmission may be supported by a UE capability, and may be set to "enabled" by higher layer signaling. In non-codebook-based PUSCH transmission, a specific DCI format (for example, DCI format 0_1/0_2) may include a plurality of (for example, two) SRI fields corresponding to a plurality of (for example, two) SRS resource sets. In codebook-based PUSCH transmission, a specific DCI format (for example, DCI format 0_1/0_2) may include a plurality of (for example, two) SRI fields corresponding to a plurality of (for example, two) SRS resource sets, and the specific DCI format may include a plurality of (for example, two) TPMI fields.

### <First Embodiment>

For non-codebook-based PUSCH transmission, a UE may judge a plurality of (for example, two) SRI field values on the basis of the number of repetitions to be indicated/configured. For example, the UE may interpret an SRI field value to be indicated in a case where the number of repetitions K = 1 is indicated for the UE, in a manner different from that in a case where the number of repetitions K > 1 is configured/indicated for the UE.

When the number of repetitions K > 1 (repetition transmission) is configured/indicated for the UE, the UE may apply, to correspondence (mapping) between an SRI field and an SRS resource, an association (for example, a table) including an entry of a single SRS resource (Embodiment 1-1).

For example, when the number of repetitions K > 1 is configured/indicated for the UE, the UE may judge that an association including only an entry of a single SRS resource is applied to correspondence between an SRI field and an SRS resource. In other words, in Embodiment 1-1, the UE may, when the number of repetitions K > 1 (repetition transmission) is configured/indicated, judge an SRS resource on the basis of an SRI field by referring to a table in which only an entry of a single SRS resource is associated with an SRI field.

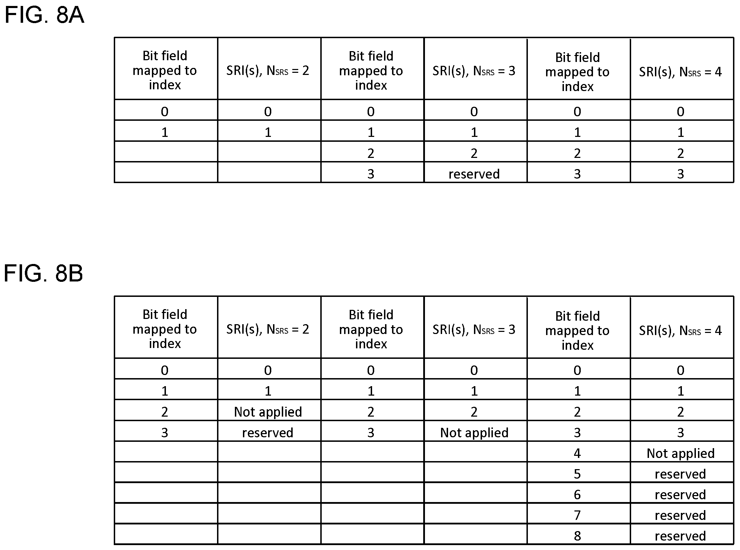

The association may be such an association including a single SRS resource as that shown in FIG. 5A, the association being defined in Rel. 15, or may be an association including a single SRS resource, the association being defined in Rel. 17 (or later versions). For example, the association may be non-codebook-based correspondence (mapping) between an SRI field and an SRS resource in a case where K > 1 and Lₘₐₓ = 1, 2, 3, or 4 are indicated by using repetition type A (see FIG. 8A).

When dynamic switching between single-TRP transmission (repetition transmission) and multi-TRP repetition transmission is indicated by using each SRI field, each SRI field may include an entry/codepoint for indicating that an SRI field is not applied (entry/codepoint not to be applied). The association in this case may also be non-codebook-based correspondence (mapping) between an SRI field and an SRS resource in a case where K > 1 and Lₘₐₓ = 1, 2, 3, or 4 are indicated by using repetition type A in a manner similar to that described above (see FIG. 8B) .

In order for the number of DCI blind detections not to increase, it is preferable that when dynamic switching between a single transmission (1-slot transmission) and repetition transmissions (multi-slot transmission) is performed, a DCI payload (size) is the same in both cases of the single transmission and the repetition transmissions. Such an association as that described in an example of FIG. 8B is used, thereby allowing a DCI payload in a single transmission to be the same as that in repetition transmissions while allowing an increase in a DCI payload to be suppressed.

Note that in the present disclosure, an entry/codepoint not to be applied may be interpreted as an inapplicable entry/codepoint, a reserved entry/codepoint, an entry/codepoint indicating "Not applied," or the like. For example, the entry/codepoint not to be applied may be a reserved entry/codepoint out of an SRI field in Rel. 16. "Not applied" of the present disclosure and each of "Not Applicable," "Not Available," "N/A," "not valid," and the like may be interchangeably interpreted.

When a plurality of (for example, two) entries/codepoints other than the entry/codepoint not to be applied (that is, valid entries/codepoints) are indicated, the UE may perform multi-TRP PUSCH repetition transmission. When one valid entry/codepoint and the entry/codepoint not to be applied are indicated, the UE may perform single-TRP PUSCH transmission.

When the number of repetitions K = 1 (single transmission) is configured/indicated for the UE, the UE may determine, on the basis of a plurality of (for example, two) SRI fields, an SRS resource to be used/applied (Embodiment 1-2).

For example, when the number of repetitions K = 1 is configured/indicated, the UE may judge that the SRS resource corresponds to a codepoint constituted by a combination of a plurality of (for example, two) SRI fields. In this case, the UE may judge the SRS resource to be used on the basis of an association (for example, a table) between an SRI field and an SRS resource defined in Rel. 16 (or earlier versions). The UE may interpret a bit field ("Bit field mapped to index") in associations shown in FIGS. 5A, 5B, 6A, and 6B and the like as a bit field (codepoint) constituted by a combination of a plurality of SRI fields.

The codepoint constituted by the combination of the plurality of (for example, two) SRI fields may be a bit field (bit string) obtained by combining the plurality of SRI fields (bit strings).

For example, the UE may judge that (a codepoint of) a first SRI field for a first TRP is a most significant bit (MSB) of a codepoint indicating a combination of a plurality of SRI fields (or from the number of most significant bits to a specific number of (for example, two) bits). The UE may judge that (a codepoint of) a second SRI field for a second TRP is a least significant bit (LSB) of a codepoint indicating a combination of a plurality of SRI fields (or from the number of least significant bits to a specific number of (for example, two) bits). Note that in the present disclosure, the MSB and the LSB may be interchangeably interpreted.

In the present disclosure, an example of a combination of codepoints for indicating two SRIs/TPMIs is shown, but codepoints of three or more SRI/TPMI fields may be combined with each other.

In Rel. 17 (or later versions), such an association (for example, a table) including an entry including one or more SRS resources as that defined in Rel. 16 may be defined.

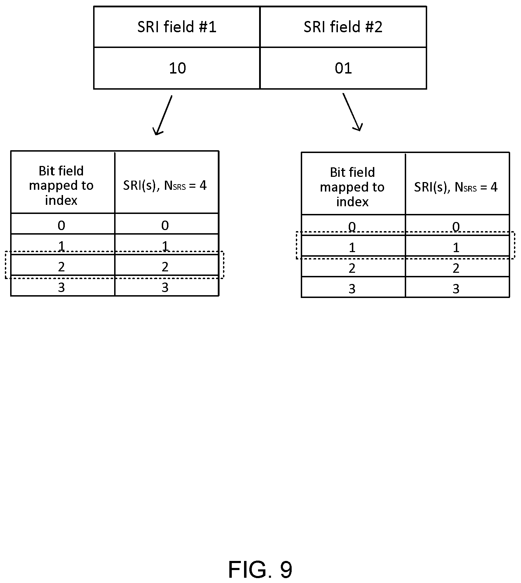

FIG. 9 is a diagram to show an example of an SRI field indication method according to a first embodiment. Respective drawings of the present disclosure below show examples of Lₘₐₓ = 2 and N_{SRS} = 4 (N_{SRS} is the number of configured SRS resources in an SRS resource set) as SRI-related associations, but employment of each embodiment of the present disclosure is not limited to these examples. In FIG. 9, the number of repetitions K > 1 (repetition transmission) is indicated for the UE. In this case, the UE determines an SRI (here, an SRI corresponding to index 2 (10)) on the basis of a codepoint (here, 10) indicated by using a first SRI field (SRI field #1). Also, the UE determines an SRI (here, an SRI corresponding to index 1 (01)) on the basis of a codepoint (here, 01) indicated by using a second SRI field (SRI field #2). Subsequently, the UE performs the repetition transmission by using the SRI corresponding to index 2 and the SRI corresponding to index 1 as a first SRI and a second SRI, respectively.

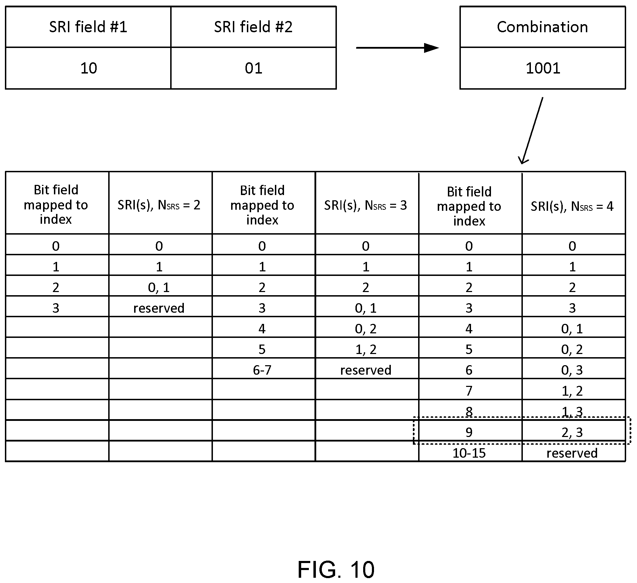

FIG. 10 is a diagram to show another example of the SRI field indication method according to the first embodiment. In FIG. 10, the number of repetitions K = 1 (single transmission) is indicated for the UE. In this case, the UE determines an SRI (here, an SRI corresponding to index 9 (1001)) on the basis of a combination (here, 1001) of a codepoint (here, 10) indicated by using a first SRI field (SRI field #1) and a codepoint (here, 01) indicated by using a second SRI field (SRI field #2). Subsequently, the UE performs the single transmission by using the SRI corresponding to index 9.

While each bit length is 4 bits if two existing SRI fields are used in a case where Lₘₐₓ = 2 and N_{SRS} = 4, a bit length of each SRI field is allowed to be 2 bits, according to the present embodiment, and thus it is possible to reduce overhead. On the other hand, multiple TRPs (SRIs/beams) are unnecessary in a case of K = 1, and thus using a combination of a plurality of (for example, two) SRI fields allows an entry for more transmitted ranks (layers) greater than 1 to be indicated.

Note that as described above, a case where different associations (tables) are used in respective cases of K > 1 and K = 1 is described, but an association common to the cases of K > 1 and K = 1 may be used. The association may be, for example, such an association defined in Rel.16 as that defined in at least one of FIGS. 5A, 5B, 6A, and 6B.

When the number of repetitions K > 1 is indicated, the UE may assume (expect) that in each SRI field, an entry corresponding to a single SRS resource is indicated on the basis of the association.

When the number of repetitions K = 1 is indicated, the UE may determine an SRS resource on the basis of a combination of a plurality of (for example, two) SRI fields. The combination of the plurality of (for example, two) SRI fields may indicate an arbitrary entry having one or more SRS resources on the basis of an association (for example, reference to an association shown in an example of FIG. 5B). When K > 1 is indicated, an SRI corresponding to one of index 0 to index 3 can be indicated by using 2 bits of each SRI field, out of such an association as that shown in the example of FIG. 5B. When K = 1 is indicated, an SRI corresponding to one of index 0 to index 16 can be indicated by using 4 bits constituted by a combination of a plurality of SRI fields, out of such an association as that shown in the example of FIG. 5B.

According to the above first embodiment, SRI determination with consideration of a transmitted rank can be appropriately controlled even when dynamic switching between a single transmission and repetition transmissions is performed.

### <Second Embodiment>

For codebook-based PUSCH transmission, a UE may judge a plurality of (for example, two) TPMI field values on the basis of the number of repetitions to be configured/indicated. For example, the UE may interpret a TPMI field value to be indicated in a case where the number of repetitions K = 1 is indicated for the UE, in a manner different from that in a case where the number of repetitions K > 1 is indicated for the UE.

When the number of repetitions K > 1 (repetition transmission) is configured/indicated for the UE, the UE may apply, to correspondence (mapping) between a TPMI field, and the number of layers and precoding information, an association (for example, a table) including entries of the number of layers 1 and precoding information corresponding to the number of layers 1 (which may be referred to as a TPMI or a TPMI value) (Embodiment 2-1).

For example, when the number of repetitions K > 1 is configured/indicated, the UE may apply, to correspondence between a TPMI field, and the number of layers and precoding information, an association including only entries of the number of layers 1 and precoding information (TPMI value) corresponding to the number of layers 1. In other words, in Embodiment 2-1, the UE may, when the number of repetitions K > 1 (repetition transmission) is configured/indicated, judge the number of layers and a TPMI on the basis of a number of layers and precoding information field by referring to a table in which only entries of 1 layer and corresponding precoding information are associated with the number of layers and precoding information.

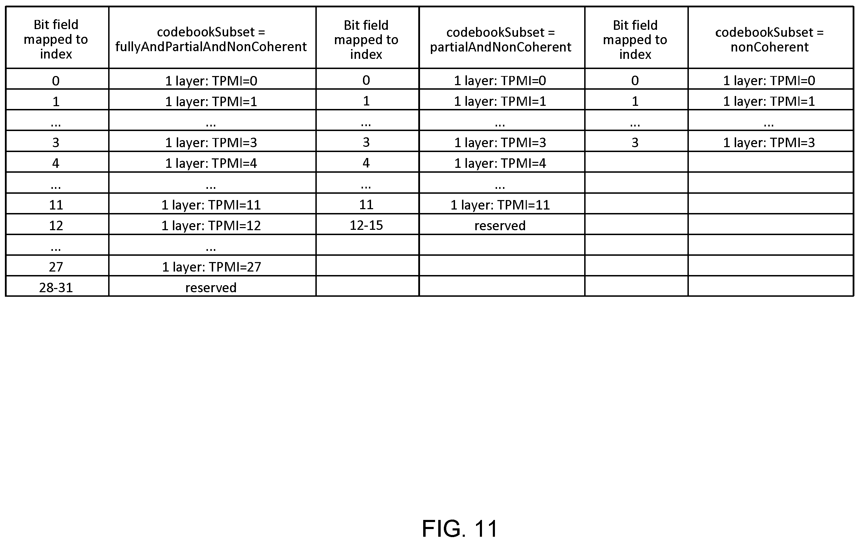

The association may be an association including the number of layers 1 and precoding information corresponding to the number of layers 1, the association being defined in Rel. 17 (or later versions). In this case, the entries included in the association may reuse entries included in an existing association defined in Rel. 16 (or earlier versions). The association may be an existing association in which a maximum rank is 1 (maxRank = 1), the association being defined in Rel. 16 (or earlier versions). For example, the association may be an association in a case where, in 4 antenna ports, transform precoding is disabled, a maximum rank is 2, 3, or 4 (maxRank = 2, 3, or 4), and UL full power transmission (higher layer parameter "ul-FullPowerTransmission-r16") is not configured, full power mode 2 is configured (the higher layer parameter "ul-FullPowerTransmission-r16" is set to "fullpowerMode2"), or a full power mode is configured (the higher layer parameter "ul-FullPowerTransmission-r16" is set to "fullpowerMode") (see FIG. 11).

When dynamic switching between single-TRP transmission (repetition transmission) and multi-TRP repetition transmission is indicated by using each TPMI field, each TPMI field may include a codepoint for indicating that at least one of an SRI field/TRP corresponding to a TPMI field is not applied (entry/codepoint not to be applied).

When dynamic switching between single-TRP transmission (repetition transmission) and multi-TRP repetition transmission is indicated by using one TPMI field, the TPMI field (for example, a TPMI field corresponding to a second TRP) may include a codepoint for indicating which of a first SRI field (first TRP), a second SRI field (second TRP), or both of the first SRI field and second SRI field is applied.

When the number of repetitions K = 1 (single transmission) is configured/indicated for the UE, the UE may determine, on the basis of a plurality of (for example, two) TPMI fields, the number of layers and precoding information to be used/applied (Embodiment 2-2).

For example, when the number of repetitions K = 1 is configured/indicated, the UE may judge that a codepoint constituted by a combination of codepoints of a plurality of (for example, two) TPMI fields corresponds to the number of layers and the precoding information. In this case, the UE may judge the number of layers and the precoding information to be used on the basis of an association (for example, a table) between a plurality of TPMI fields, and the number of layers and precoding information, the association being defined in Rel. 16 (or earlier versions). The UE may interpret a bit field ("Bit field mapped to index") in associations shown in FIG. 7 and the like as a bit field (codepoint) constituted by a combination of a plurality of TPMI fields.

The codepoint constituted by the combination of the plurality of (for example, two) TPMI fields may be a bit field (bit string) obtained by combining the plurality of TPMI fields (bit strings).

For example, the UE may judge that (a codepoint of) a first TPMI field for a first TRP is an MSB of a codepoint indicating a combination of a plurality of TPMI fields (or from the number of most significant bits to a specific number of (for example, two) bits). The UE may judge that (a codepoint of) a second TPMI field for a second TRP is an LSB of a codepoint indicating a combination of a plurality of TPMI fields (or from the number of least significant bits to a specific number of (for example, two) bits).

In Rel. 17 (or later versions), such an association (for example, a table) including an entry including one or more numbers of layers as that defined in Rel. 16 may be defined.

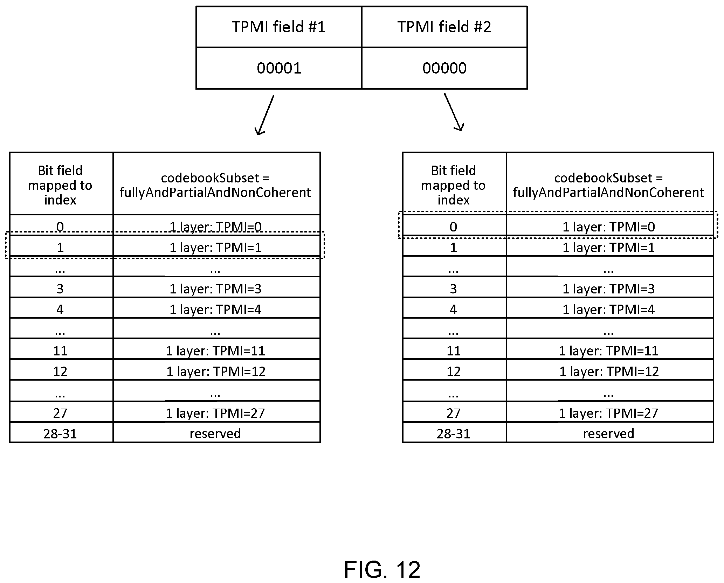

FIG. 12 is a diagram to show an example of a TPMI field indication method according to a second embodiment. Respective drawings of the present disclosure below show examples of a case where, as a TPMI-related association, the number of antenna ports is 4, transform precoding is disabled, a maximum rank is 2, 3, or 4 (maxRank = 2, 3, or 4), and UL full power transmission (higher layer parameter "ul-FullPowerTransmission-r16") is not configured, full power mode 2 is configured (the higher layer parameter "ul-FullPowerTransmission-r16" is set to "fullpowerMode2"), or a full power mode is configured (the higher layer parameter "ul-FullPowerTransmission-r16" is set to "fullpowerMode"), but employment of each embodiment of the present disclosure is not limited to these examples.

In FIG. 12, the number of repetitions K > 1 (repetition transmission) is indicated for the UE. In this case, the UE determines the number of layers and precoding information (here, the number of layers and a TPMI corresponding to index 1 (00001)) on the basis of a codepoint (here, 00001) indicated by using a first TPMI field (TPMI field #1). Also, the UE determines the number of layers and precoding information (here, the number of layers and a TPMI corresponding to index 0 (00000)) on the basis of a codepoint (here, 00000) indicated by using a second TPMI field (TPMI field #2). Subsequently, the UE performs the repetition transmission by using the number of layers and the precoding information corresponding to index 1 and the number of layers and the precoding information corresponding to index 0 as a first number of layers and precoding information and a second number of layers and precoding information, respectively.

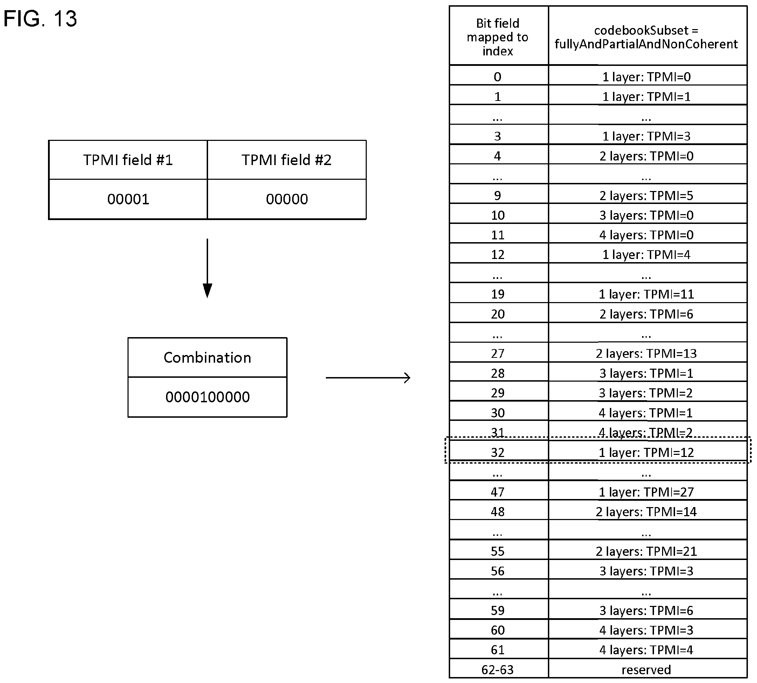

FIG. 13 is a diagram to show another example of the TPMI field indication method according to the second embodiment. In FIG. 13, the number of repetitions K = 1 (single transmission) is indicated for the UE. In this case, the UE determines the number of layers and precoding information (here, the number of layers and precoding information corresponding to index 32 (0000100000)) on the basis of a combination (here, 0000100000) of a codepoint (here, 00001) indicated by using a first TPMI field (TPMI field #1) and a codepoint (here, 00000) indicated by using a second TPMI field (TPMI field #2). Subsequently, the UE performs the single transmission by using the number of layers and the precoding information corresponding to index 32.

The present embodiment allows a bit length of each TPMI field to be 5 bits, while a bit length of an existing TPMI field is 6 bits, and thus it is possible to reduce overhead. On the other hand, multiple TRPs (TPMIs) are unnecessary in a case of K = 1, and thus using a combination of a plurality of (for example, two) TPMI fields allows an entry for more transmitted ranks (layers) greater than 1 to be indicated.

Note that as described above, a case where different associations (tables) are used in respective cases of K > 1 and K = 1 is described, but an association common to the cases of K > 1 and K = 1 may be used.

According to the above second embodiment, TPMI determination with consideration of a transmitted rank can be appropriately controlled even when dynamic switching between a single transmission and repetition transmissions is performed.

### <Third Embodiment>

In a case where the number of repetitions is configured by using a higher layer, a DCI bit size for an SRI/TPMI field may vary depending on higher layer configuration for the number of PUSCH repetitions (K = 1 or K > 1). The case where the number of repetitions is configured by using the higher layer may be a case where dynamic switching between a single transmission (1-slot transmission) and repetition transmissions (multi-slot transmission) is not supported (method 1 mentioned above).

In the case where the number of repetitions is configured by using the higher layer, a UE may, when the number of repetitions greater than 1 is configured, apply at least one of SRI-related indication and association corresponding to a case of K > 1 described in the above-described first embodiment and TPMI-related indication and association corresponding to a case of K > 1 described in the above-described second embodiment.

In the case where the number of repetitions is configured by using the higher layer, the UE may, when the number of repetitions is set to 1 (when the number of repetitions is set to "without repetition"), apply at least one of SRI-related indication and association defined in Rel. 16 and TPMI-related indication and association defined in Rel. 16.

According to the above third embodiment, SRI and TPMI determination with consideration of a transmitted rank can be appropriately controlled even when dynamic switching between a single transmission and repetition transmissions is performed.

### <Fourth Embodiment>

In a fourth embodiment, a UE capability will be described. A UE may report (transmit), to a NW, whether to have the capability.

The capability may be defined by whether to support multi-TRP PUSCH repetition transmission (M-TRP PUSCH repetition).

The capability may be defined by whether to support multi-TRP PUSCH repetition transmission of repetition type A (M-TRP PUSCH repetition for repetition TYPE A).

The capability may be defined by whether to support multi-TRP PUSCH repetition transmission of repetition type B (M-TRP PUSCH repetition for repetition TYPE B).

The capability may be defined by whether to support non-codebook-based multi-TRP PUSCH repetition transmission (M-TRP PUSCH repetition for non-codebook).

The capability may be defined by whether to support codebook-based multi-TRP PUSCH repetition transmission (M-TRP PUSCH repetition for codebook).

The capability may be defined by whether to support an association (for example, a table) for non-codebook SRI indication in a case where the number of repetitions K > 1 is indicated/configured for repetition type A.

The capability may be defined by whether to support an association (for example, a table) for codebook TPMI indication in a case where the number of repetitions K > 1 is indicated/configured for repetition type A.

The capability may be defined by whether to support dynamic switching between single-TRP transmission and multi-TRP transmission. For example, the capability may be defined by whether to support dynamic switching between the number of repetitions K = 1 and the number of repetitions K > 1 for PUSCH transmission. The capability may be defined by whether to support only semi-static indication of the number of PUSCH repetitions (in other words, configuration using higher layer signaling).

Note that each embodiment of the present disclosure may be employed under a condition of at least one of a case where the UE has reported, to the NW, a UE capability corresponding to the above-described at least one and a case where the UE capability for the above-described at least one has been configured/activated/indicated for the UE by higher layer signaling. Each embodiment of the present disclosure may be employed in a case where a specific higher layer parameter has been configured/activated/indicated for the UE.

According to the above fourth embodiment, the UE can achieve methods described in the above-mentioned embodiments while maintaining compatibility with existing specifications.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

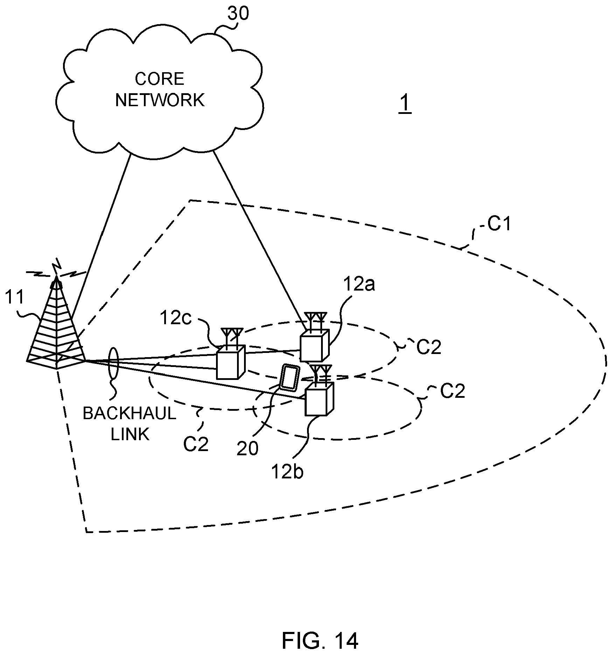

FIG. 14 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations (for example, RRHs) 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

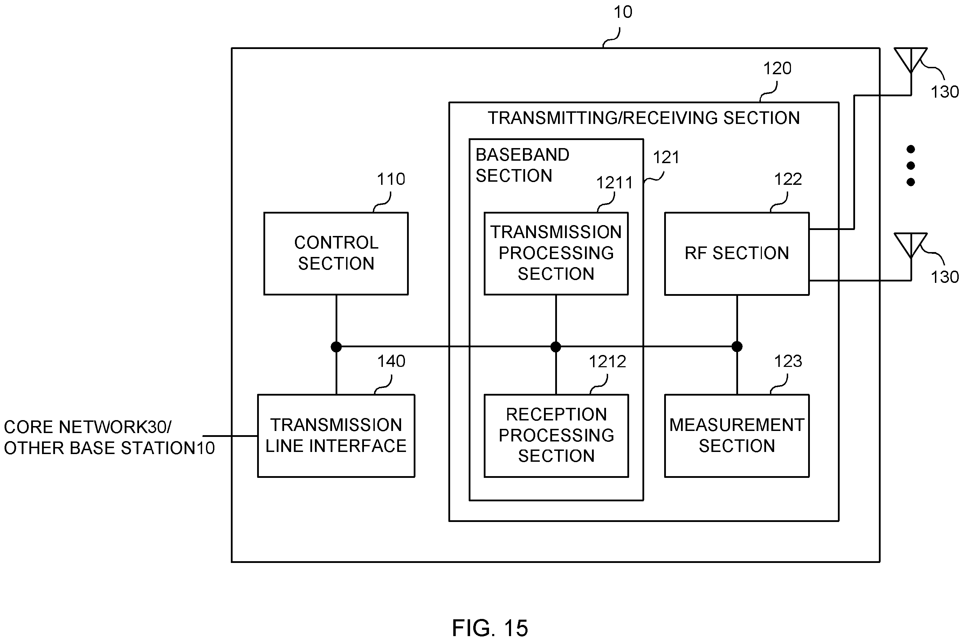

FIG. 15 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit one piece of downlink control information (DCI) for one or more repetition transmissions of an uplink shared channel (Physical Uplink Shared Channel (PUSCH)) and information related to the number of repetitions of the PUSCH. The control section 110 may determine, on the basis of the number of repetitions indicated by using the information related to the number of repetitions, an association between a sounding reference signal resource and one or more SRS resource indicator (SRI) field values included in the DCI, the association being for application to transmission of the PUSCH (first embodiment).

The transmitting/receiving section 120 may transmit one piece of downlink control information (DCI) for one or more repetition transmissions of an uplink shared channel (Physical Uplink Shared Channel (PUSCH)) and information related to the number of repetitions of the PUSCH. The control section 110 may determine, on the basis of the number of repetitions indicated by using the information related to the number of repetitions, an association between a transmitted precoding matrix indicator (TPMI) and a transmitted rank, and one or more TPMI field values included in the DCI, the association being for application to transmission of the PUSCH (second embodiment).

### (User Terminal)

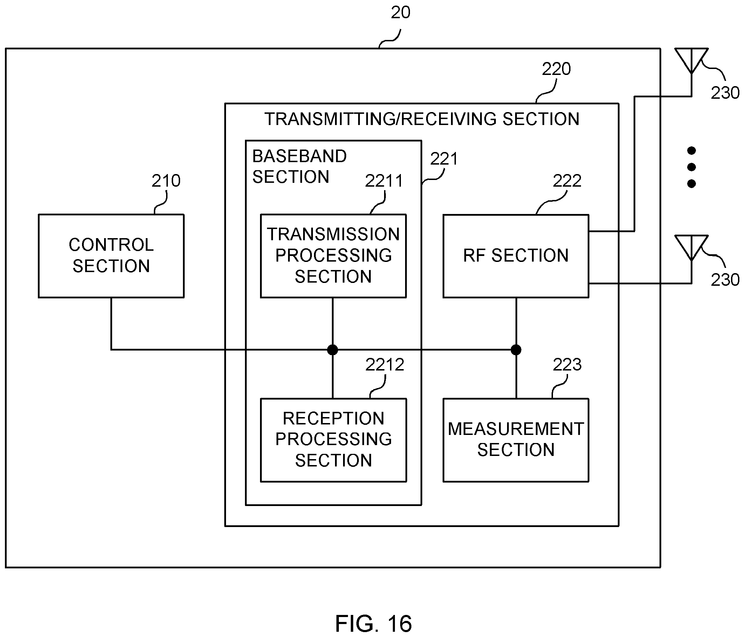

FIG. 16 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211 and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive one piece of downlink control information (DCI) for one or more repetition transmissions of an uplink shared channel (Physical Uplink Shared Channel (PUSCH)) and information related to the number of repetitions of the PUSCH. The control section 210 may determine, on the basis of the number of repetitions indicated by using the information related to the number of repetitions, an association between a sounding reference signal resource and one or more SRS resource indicator (SRI) field values included in the DCI, the association being for application to transmission of the PUSCH (first embodiment).

When the number of repetitions is greater than 1, the association may include only an entry having one SRS resource (first embodiment).

When the number of repetitions is greater than 1, the association may include an entry for indicating that an SRI is not applied (first embodiment).

When the number of repetitions is 1, the control section 210 may determine, on the basis of a bit string obtained by combining a plurality of SRI fields included in the DCI, an SRS resource to be applied to transmission of the PUSCH (first embodiment).

The transmitting/receiving section 220 may receive one piece of downlink control information (DCI) for one or more repetition transmissions of an uplink shared channel (Physical Uplink Shared Channel (PUSCH)) and information related to the number of repetitions of the PUSCH. The control section 210 may determine, on the basis of the number of repetitions indicated by using the information related to the number of repetitions, an association between a transmitted precoding matrix indicator (TPMI) and a transmitted rank, and one or more TPMI field values included in the DCI, the association being for application to transmission of the PUSCH (second embodiment).

When the number of repetitions is greater than 1, the association may include only an entry with a transmitted rank value being 1 (second embodiment).

When the number of repetitions is greater than 1, the association may include an entry for indicating that the TPMI is not applied (second embodiment).

When the number of repetitions is 1, the control section 210 may determine, on the basis of a bit string obtained by combining a plurality of TPMI fields included in the DCI, a TPMI and a transmitted rank to be applied to transmission of the PUSCH (second embodiment).

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

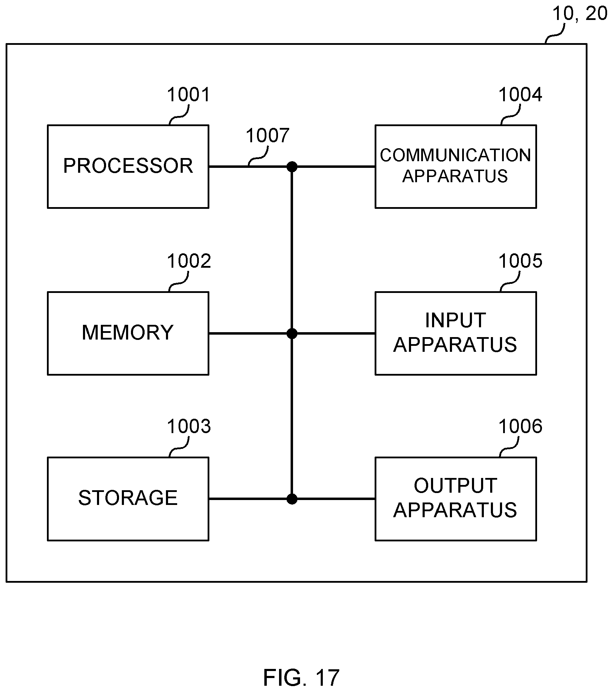

For example, a base station, a user terminal, and so on according to one embodiment of the present disclosure may function as a computer that executes the processes of the radio communication method of the present disclosure. FIG. 17 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE may not assume that a certain signal/channel is transmitted/received outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a mobile body or a mobile body itself, and so on. The mobile body may be a vehicle (for example, a car, an airplane, and the like), may be a mobile body which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives one piece of downlink control information (DCI) for one or more repetition transmissions of an uplink shared channel (Physical Uplink Shared Channel (PUSCH)) and information related to a number of repetitions of the PUSCH; and
a control section that determines, based on a number of repetitions indicated by using the information related to the number of repetitions, an association between a sounding reference signal resource and one or more SRS resource indicator (SRI) field values included in the DCI, the association being for application to transmission of the PUSCH.

2. The terminal according to claim 1, wherein
when the number of repetitions is greater than 1, the association includes only an entry having one SRS resource.

3. The terminal according to claim 1, wherein
when the number of repetitions is greater than 1, the association includes an entry for indicating that an SRI is not applied.

4. The terminal according to claim 1, wherein
when the number of repetitions is 1, the control section determines, based on a bit string obtained by combining a plurality of SRI fields included in the DCI, an SRS resource to be applied to transmission of the PUSCH.

5. A radio communication method for a terminal, the radio communication method comprising:
receiving one piece of downlink control information (DCI) for one or more repetition transmissions of an uplink shared channel (Physical Uplink Shared Channel (PUSCH)) and information related to a number of repetitions of the PUSCH; and
determining, based on a number of repetitions indicated by using the information related to the number of repetitions, an association between a sounding reference signal resource and one or more SRS resource indicator (SRI) field values included in the DCI, the association being for application to transmission of the PUSCH.

6. A base station comprising:
a transmitting section that transmits one piece of downlink control information (DCI) for one or more repetition transmissions of an uplink shared channel (Physical Uplink Shared Channel (PUSCH)) and information related to a number of repetitions of the PUSCH; and
a control section that determines, based on a number of repetitions indicated by using the information related to the number of repetitions, an association between a sounding reference signal resource and one or more SRS resource indicator (SRI) field values included in the DCI, the association being for application to transmission of the PUSCH.
